# EUROPEAN PATENT APPLICATION

(11) **EP 2 682 177 A2**
(43) Date of publication of application: **08.01.2014**
(21) Application number: 12752045.0
(22) Date of filing: 28.02.2012
(51) Int. Cl.: B01D 71/26

(54) **COMPOSITE MATERIAL FOR PURIFICATION OF A LIQUID BY FILTRATION**

(30) Priority: 01.03.2011 RU 2011108520
(71) Applicant: Electrophor, Inc., Dobbs Ferry, NY 10522 (US)
(72) Inventor: VASILYEVA, Evgeniya Sergeevna, St.Petersburg 192236 (RU); MITILINEOS, Aleksandr Gennadievich, St.Petersburg 195229 (RU); SHMIDT, Joseph Lvovich, New York, New York 10069 (US)
(74) Representative: Rupprecht, Kay
(86) International application number: PCT/RU2012/000138
(87) International publication number: WO 2012/118408

(57) **Abstract**

The invention relates to composite materials, more specifically to composite membrane materials on the basis of polymeric materials used for the purification of a liquid, in particular drinking water. The novel composite material for the purification of a liquid by filtration is formed from a polymeric membrane in the form of a fibrillar-porous matrix comprising a hydrophilic polymer and a metallic antibacterial agent. The fibrillar-porous matrix comprises, at least in part of the volume thereof, stable active zones consisting of clusters of a metallic antibacterial agent in combination with molecules of hydrophilic polymer, wherein at least some of the clusters of metallic antibacterial agent are bonded to one another and to the surface of the pores of the matrix by means of the molecules of hydrophilic polymer, wherein at least some of the clusters of metallic antibacterial agent are additionally chemically bonded to the surface of the pores of the matrix, wherein the mean distance between the active zones is smaller than at least three times the mean diameter of the pores of the matrix. The technical result achieved using the invention consists in achieving stable hydrophilicity of the polymeric membrane during use thereof while at the same time maintaining the permeability of the polymeric membrane and increasing the bacteriostasis of the composite material. An additional technical result achieved using the invention consists in increasing the bacteriostasis of the juxtamembrane region during filtration of a liquid.

## Description

### Field of the invention

The invention relates to composite materials, more specifically to composite membrane materials based on polymer materials, which are used for purification of a liquid, in particular of drinking water.

### Prior art

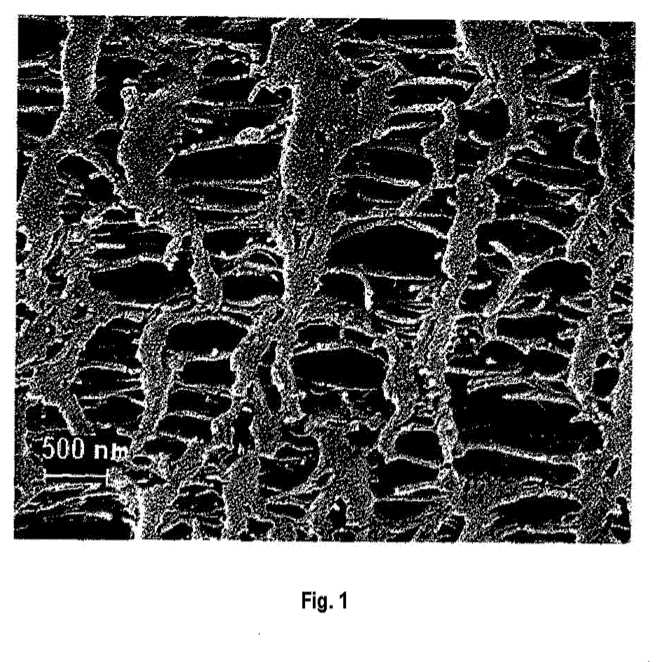

Among membrane materials for purifying liquid media, in particular for water purification, polymer materials are presently used, which belong to different classes: polyolefins, polysulphones, polyamides, polyacrylates, polyesters etc. Membrane materials may be obtained by extrusion with subsequent extraction technique or e.g. by a phase inversion technique. Such membranes have a unique fibrillar-porous matrix (hereinafter referred to simply as matrix) consisting of filamentous molecular aggregates (fibrils) separated by microcavities (pores), see Fig. 1. As the fibrils are spatially dissociated and their surface constitutes the wall surface for the microcavities, such matrix comprises a vast number of pores together forming a porous membrane surface. In this case, the "porous membrane surface" should be understood as a common surface of all pores that constitute the matrix, including the surface of the pores that are located on the outer side of the membrane (hereinafter referred to as matrix pore surface).

Membrane materials made of polyolefins, e.g. of polyethylene or polypropylene (obtained using the extrusion with subsequent extraction technique and having a fibrillar-porous matrix) have a number of notable advantages: highest mechanical resistance, excellent chemical resistance when operating in different environments, possibility of controlling transport and barrier properties of membranes on their basis within a wide range. The only disadvantage of polyolefin-based membrane materials, which is a significant hindrance to their widespread use for filtering aqueous solutions, is their hydrophobic nature.

All membrane materials are microbiologically unsafe, as due to their barrier properties they are to a certain extent susceptible to microbiological fouling, when a biofilm forms on the surface and the development of microbial population is potentially incontrollable. Bacteriostatic characteristics of the surface of membrane materials may be controlled by different methods, e.g. by using polymer coatings with bacteriostatic properties on the surface of the membrane material, or using metal ions with antibacterial activity in the production of the membrane materials.

A polyolefin-based hydrophilic membrane material and production method thereof according to US Patent No. 4,717,479, MITSUBISHI RAYON CO, published 05.01.1988, B01D67/00 is known in the prior art, according to which a film of hydrophilizing monomer having an HLB value of 2-20 (preferably an HLB value of 5-15) is polymerized on a surface of a hydrophobic polyolefin membrane. Disadvantages of this material are that the polymers used in it have low chemical stability, can actively swell and reduce the permeability of the membrane, and are not bacteriostatic.

Japanese Patent No. 10-004852, SLIONTEC KK, published 13.01.1998, A01M21/04, discloses a polypropylene-based hydrophilic material that prevents the growth and development of microbial entities, in particular of algae, said material comprising particles of silver-bearing zeolite. A disadvantage of such material is that it is hard to maintain such stable and reproducible background concentration of silver ions that would be sufficient for effective prevention of the growth of microorganisms, which concentration would be dependent, in particular, on the size of zeolite particles.

Japanese Patent No. 02-152530, MITSUBISHI RAYON CO, published 12.06.1990, B01D69/00, B01D67/00 discloses a hollow-fiber membrane material. A layer of metallic silver is deposited on a polyethylene membrane surface as a result of a silver mirror reaction, said layer preventing the surface from colonization by fungi. A disadvantage of such membrane material consists in that a layer of metallic silver having a small specific surface is formed by the sliver mirror reaction, which prevents the formation of significant background concentrations of silver ions in an area that is immediately adjacent to the membrane. Besides, the formation of a metallic layer on the membrane surface does not hydrophilize said surface, i.e. the surface remains hydrophobic and would become unsuitable for use in filtering aqueous solutions after the membrane gets dry.

US Patent No. 6,652,751, NATIONAL RESEARCH COUNCIL OF CANADA, published 25.11.2003, B01D69/00, B01D67/00, describes a membrane material and a water filtering installation using said material. The material is a bacteriostatic polymer membrane produced either by adsorption of metal ions having bacteriostatic properties with their subsequent *in situ* reduction to metals or by introducing metal ions having bacteriostatic properties into an inert membrane in the process of its formation, with their subsequent reduction to respective metals. A drawback of such material is that it is possible to use only a very limited range of initial monomers in the synthesis of a polymer membrane, which implies a very narrow range of characteristics for the potentially obtained polymer membranes.

References disclose composite materials made of a polymer membrane coated by a hydrophilizing polymer film, which comprises different kinds of dispersed additive metal particles with antibacterial properties that provide such composite membranes with bactericidal properties (Japanese Patent No. 2005111429, TORAY INDUSTRIES, published 28.04.2005, B01D69/00). Such hydrophilizing films are normally rather dense and reduce the permeability of the membrane or are easily washed away with water.

Filtering materials with antimicrobial activity are known, which comprise clusters or nanoparticles, which are dispersed in a carrier medium, of a metal that has antibacterial properties.

For example, a composite filtering material with an antimicrobial activity is known, which has a three-layer structure of silver bearing nanoparticles on a surface of a carrier (aluminum silicate, aluminum oxide, titanium dioxide), in which structure the first layer from the carrier comprises metallic silver particles, the second layer comprises silver oxide particles, and the third layer comprises silver clusters. The method of producing the material includes purifying the surface of the carrier, treating the carrier with an aqueous solution of a stannous salt, treatment with an aqueous solution of a silver salt, washing the carrier with demineralized water and then performing the reduction of silver ions by photoactivation in the phase of the carrier until a layer comprising silver nanoparticles is formed on its surface, and drying (RU 2315649, Parfenov A.S., published 27.01.2008, B01D39/00). However, the use of the known three-layer structure of silver bearing nanoparticles in the composite materials for purification of a liquid by filtration, where polymer membrane materials are used as a carrier, is not efficient due to a complicated technology of producing the known structure, as well as due to possible washing out of the silver from the material in the process of its use.

The closest analogue (prototype) of the invention is a hydrophilic antibacterial porous membrane made of a polymer membrane in the form of a fibrillar-porous matrix comprising a hydrophilic polymer and an antibacterial agent (JP05-115760, MITSUBISHI RAYON CO LTD, published 14.05.1993, B01D69/00, B01D67/00). The matrix pore surface is covered by a layer of hydrophilic polymer comprising a dispersed metallic antibacterial agent. The hydrophilic layer is held on the membrane by a mechanical engagement between the hydrophilic polymer and the fibrillar-porous matrix ("anchor mechanism"), wherein the metallic antibacterial agent is present in a dispersed state in the hydrophilic layer and is not directly bound *per* se with the matrix pore surface.

A membrane that has a fibrillar-porous structure, e.g. based on polyethylene or polypropylene, is used as the porous polymer membrane. A monomer, e.g. dimethylacrylamide or vinylpyrrolidon, or a polymer e.g. based on one of said monomers, is used as the hydrophilic polymer, and fine powder containing heavy metals with antibacterial properties, e.g. copper or silver or their compounds, is used as the metallic antibacterial agent.

The antibacterial hydrophilic porous membrane is obtained by immersion of a hydrophobic polymer membrane in a solution that contains the metallic antibacterial agent and the hydrophilic polymer. In the meantime, if a monomer is used as the hydrophilic polymer, the formation of the hydrophilic layer on the matrix pore surface is provided by polymerization of the monomer in the presence of an initiating agent (e.g. benzoyl peroxide or azobisisobutyronitrile), and if a polymer is used as the hydrophilic polymer, the formation of the hydrophilic layer is provided by solvent evaporation during heat treatment.

However, a hydrophilizing layer obtained under such conditions is very soluble in water and would be quickly washed away, as this layer is not chemically bound to the surface of the hydrophobic membrane. Also, there is no direct bond between the metallic antibacterial agent dispersed in the layer of hydrophilic polymer and the porous membrane surface, which may cause an uncontrollable discharge of said metallic antibacterial agent into the filtrate and to a reduced antibacterial activity of the composite membrane. Besides, dispersed particles of fine metal powder would have a size in the order of several dozen micrometers, i.e. would be quite large, and therefore would have a small specific surface (the value of specific surface is inversely proportional to the size of dispersed phase particles), which would prevent the formation of significant background concentrations of respective metal ions in the area that is immediately adjacent to the membrane.

Besides, heat treatment used at the step of producing a composite membrane may cause degradation of membrane structure and irreversible changes in its fibrillar-porous morphology, which lead to a reduced permeability or occurrence of structural defects.

### Summary of the invention

The object of the invention is to provide a new composite material that makes it possible to avoid the above-mentioned disadvantages.

The technical result achieved by using the invention consists in providing a stable hydrophilicity of the polymer membrane in the process of its use while maintaining the permeability of the polymer membrane and improving the bacteriostatic performance of the composite material.

A further technical result achieved by using the invention consists in an improved bacteriostatic performance of the juxtamembrane region during filtration of a liquid.

The above objective and the specified technical result are achieved by providing a new composite material for purifying a liquid by filtration, which material is made of a polymer membrane in the form of a fibrillar-porous matrix comprising a hydrophilic polymer and a metallic antibacterial agent, wherein according to the invention the fibrillar-porous matrix comprises, at least in part of its volume, stable active zones consisting of clusters of the metallic antibacterial agent in combination with molecules of hydrophilic polymer, wherein at least some of the clusters of the metallic antibacterial agent are bound to each other and to the matrix pore surface by molecules of the hydrophilic polymer, wherein at least some of the clusters of the metallic antibacterial agent are additionally chemically bound to the matrix pore surface, wherein the mean distance between the active zones is smaller than at least three times the diameter of the matrix pores. Furthermore, the amount of the clusters of the metallic antibacterial agent is not more than 50 mg per 1 m² of the outer surface of polymer membrane, and the amount of the hydrophilic polymer is not more than 80 mg per 1 m² of the outer surface of the polymer membrane, wherein a membrane based on polyolefins, polyacrylates, polyesters, polyamides or polysulphones is used as the polymer membrane. A hollow-fiber membrane based on polyolefins, preferably on polyethylene, is preferably used. Furthermore, polyvinyl alcohol, vinylpyrrolidon, polyamines or any combination thereof are preferably used as the hydrophilic polymer. The use of polyvinyl alcohol is preferred. Furthermore, clusters of metallic antibacterial agent are e.g. clusters of silver, copper or gold.

As compared to the prototype, stable hydrophilicity of the polymer membrane in the process of its use while maintaining its permeability and improved bacteriostatic performance of the composite material are achieved due to the presence of stable active zones in the composite material, which comprise clusters of metallic antibacterial agent in combination with molecules of the hydrophilic polymer, due to their specific distribution in the volume of the fibrillar-porous matrix, as well as due to a specific bond ("symbiotic" interaction) of the clusters of the metallic antibacterial agent and the molecules of the hydrophilic polymer both with each other and with the matrix pore surface, wherein the clusters of systemic antibacterial agent surrounded by molecules of the hydrophilic polymer are held on the surface of the polymer membrane due to the adhesive interaction between said molecules of the hydrophilic polymer and the matrix pore surface, wherein some of said clusters of the metallic antibacterial agent are additionally chemically bound to the matrix pore surface of the membrane.

### Brief description of the drawings

Fig. 1 - an electronic photo of a polyethylene membrane obtained using an extrusion with subsequent extraction technique. Morphology of the fibrillar-porous matrix of the polymer membrane is clearly seen on the photo.
Fig. 2 - an electronic photo of a composite membrane.

### Description of embodiments

The active zone is a cluster of metallic antibacterial agent (hereinafter referred to simply as a cluster), e.g. copper, gold or silver, surrounded by molecules of a hydrophilic polymer. Formation of active zones in a fibrillar-porous matrix of the polymer membrane takes place when the membrane contacts the freshly prepared sol comprising metal clusters or particles of an unstable metal compound, which form clusters of metal e.g. by means of a reduction process. Formation of a sol is an intricate process that begins with nucleation (the process of nucleus formation), which is a formation of active particles, which subsequently form clusters, in the process of metal ions reduction in a hydrophilic polymer solution under an effect of an alkaline agent or under an effect of an alkalized aqueous solution of an alkaline metal salt, with which the metal forms an unstable compound. The membrane is brought into contact with the sol immediately after the addition of the alkaline agent or the aqueous solution of the alkaline metal salt into the solution of the hydrophilic polymer comprising ions of a metal that has bacterial properties, and preferably no later than 5 minutes after the same. In this particular time the active metallic nuclei are formed, which later form clusters of metallic antibacterial agent, which are capable of chemically binding with the matrix pore surface. Formation of active zones in the fibrillar-porous matrix may also take place by means of subsequent immersion of the membrane and holding it in solutions that wet out the surface of the membrane, said solutions comprising the hydrophilic polymer, ions of the metal with bactericidal properties and the agent that causes the formation of metal clusters that are chemically bound to the membrane surface. The sequence of treatment solutions should result in the treatment solution penetrating the whole thickness of the membrane structure and in the formation of active zones on the whole developed membrane surface. The sol formation process that would take place on the polymer matrix pore surface of the membrane after the immersion of the membrane in the last solution would proceed in a similar way through the formation of active metallic nuclei, which later form clusters of the metallic antibacterial agent that are capable of chemically binding with the matrix pore surface.

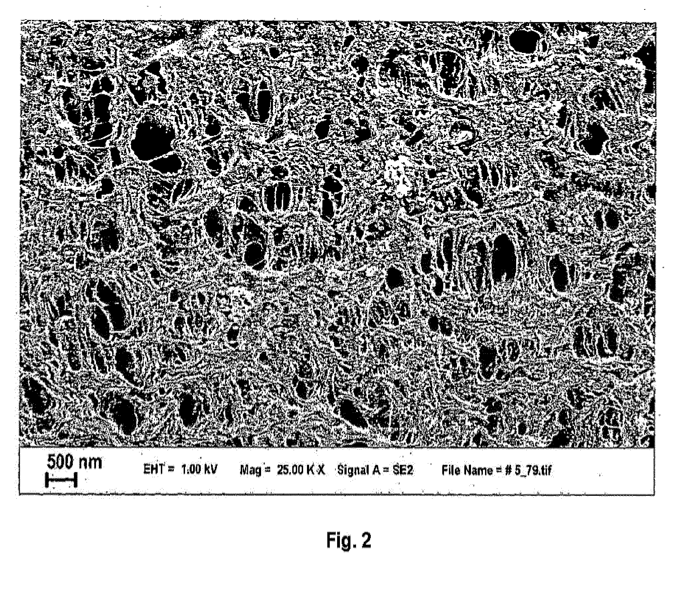

Formation of the nuclei takes place via the formation of hydroxide of respective metal and its further degradation and/or via the formation of slightly soluble and fragile silver salt with their subsequent reduction to metallic silver, where molecules of the hydrophilic polymer serve as a stabilizer for the forming active metallic particles. Stabilization takes place by means of the surface of active metallic nuclei being entangled by hydrophilic polymer macromolecule chains, which results in the formation of stable active zones, which, in combination with the hydrophilic polymer molecules, contain clusters distributed according to their size, approximately from 10 to 100 nm (Fig. 2), wherein the amount of clusters would be not more than 50 mg per 1 m² of the outer surface of the membrane, and the amount of the hydrophilic polymer would be not more than 80 mg respectively. The growth and structuration of metallic clusters in the presence of the hydrophilic polymer preferably proceeds in an alkaline environment (pH≥9) and/or under the light and at the temperature of up to 50-70°C. The sizes of formed clusters approximate to the sizes of most biological macromolecules, and their high antibacterial activity stipulated by large specific surface area and their special structure exceeds the activity level of ions. Thus, it is sufficient to use very small amounts of clusters of the metallic antibacterial agent to suppress the development of microorganisms on the surface of the membrane, as well as to maintain a stable and reproducible background concentration of antibacterial agent ions in the region that is immediately adjacent to the membrane. The clusters in combination with hydrophilic polymer molecules form stable active zones, which are well visible on the photo obtained by means of an electronic microscope, see Fig. 2. Stable active zones are seen both on the surface and in the volume of the membrane, wherein the photo clearly shows that they do not form a one-piece phase but rather the mean distance between the active zones is smaller than at least three times the mean diameter of the matrix pores. As already mentioned above, membrane materials used for purification, e.g. polyolefins, polysulphones, polyamides, polyacrylates, polyesters etc. obtained using an extrusion with subsequent extraction technique or e.g. using a phase inversion technique have a unique fibrillar-porous matrix (hereinafter referred to simply as matrix), which consists of filamentous molecular aggregates (fibrils) separated by microcavities (pores), see Fig. 1. As the fibrils are spatially dissociated and their surface constitutes the wall surface for the microcavities, such matrix comprises a vast number of pores together forming a porous membrane surface. The pores may have different shapes, from a circle to an ellipse or elongated ellipse, wherein the mean size of the pores would be in the range of 0.08 micrometers to 2.0 micrometers, preferably from 0.1 micrometers to 1.0 micrometers, see Fig. 1. When a liquid passes through the pores of the membrane, the active zones do not break up, and the hydrophilic polymer molecules are not washed out from the matrix. This is due to the fact that at least some molecules of the hydrophilic polymer are not only mechanically engaged with the matrix pore surface by means of adhesion forces, but also due to the metal clusters that are surrounded by the former and held on the matrix pore surface, which metal clusters, in their turn, additionally hold the hydrophilic polymer chains on the surface of the pores like "rivets" ("rivet mechanism"), as at least some of the clusters are additionally chemically bound to the matrix pore surface. This is made possible by the fact that in the process of production of a polymer membrane, especially using the extrusion with subsequent extraction technique, the stretched surface of the polymer becomes strained and small amounts of active functional groups are generated on it, to which active metallic nuclei (which subsequently form clusters of the metallic antibacterial agent) can particularly bind, said nuclei being formed by depositing from a hydrophilic polymer solution and respective metal ions by means of an alkaline agent or alkalized aqueous solution of an alkaline metal salt, with which the metal forms an unstable compound. Thus, a "symbiotic interaction" may be seen between the metal clusters, hydrophilic polymer molecules and the fibrillar-porous matrix, which provides stability for the active zones, due to which, under conditions of a minimal amount of hydrophilic polymer in the porous matrix as compared to the prototype, stable hydrophilicity of the membrane is achieved in the process of its use, while maintaining its permeability and improving the bacteriostatic performance of the composite material, and in the meantime an improved bacteriostatic performance of the juxtamembrane region during filtration of a liquid.

Besides, clusters that are not bound to each other by hydrophilic polymer molecules may also be present in the volume of the fibrillar-porous matrix of the composite material. They may be arranged in the form of local active zones. A local active zone may be e.g. a cluster of a metallic antibacterial agent, which is arranged on a separate fibril of the porous matrix and is entangled by hydrophilic polymer macromolecule chains, which are bound to the surface of the porous polymer matrix by adhesive interaction, and the cluster may be additionally chemically bound ("rivet mechanism") to the surface of the fibril, and the hydrophilic polymer molecules may per se be e.g. looped on the fibril in the form of a hydrophilic "ring", thus promoting the stability of the local active zone. In the meantime, the local active zones would also combine to contribute to providing for stable hydrophilicity of the polymer membrane while maintaining its permeability and improving the bacteriostatic performance of the composite material, and would also further contribute to improving the bacteriostatic performance of the juxtamembrane region during filtration of a liquid.

A membrane on the basis of polyolefins, polyacrylates, polyesters, polyamides or polysulphones may be used as the polymer membrane. It is preferred to use a hollow-fiber membrane based on polyolefins, preferably polyethylene.

As an example, a polyvinyl alcohol, vinylpyrrolidon, polyamines or any combination thereof may be used as the hydrophilic polymer. It is preferred to use a polyvinyl alcohol.

Clusters of metallic antibacterial agent may be e.g. clusters of silver, copper or gold.

The composite material is produced by treating a polymer membrane having a fibrillar-porous matrix with a freshly prepared sol that comprises clusters of metallic antibacterial agent stabilized by molecules of a hydrophilic polymer. The sol is obtained by adding an aqueous solution of a salt of an alkaline metal alkalized by its hydroxide to a solution that contains a hydrophilic polymer and a respective metal in the form of an ion, which has bacterial properties, or preferably by alkalizing the solution that contains the hydrophilic polymer and the respective metal in the form of an ion, which has bacterial properties. Alkalization is carried out up to a pH value of not less than 9, preferably not less than 12. Treatment of the polymer membrane is carried out immediately after the formation of the sol by holding the membrane in the freshly prepared sol for not less than one hour, or by treating the membrane in sequential baths that contain treatment solutions, which cause the formation of a metal particle sol having bactericidal properties and being stabilized by a watersoluble hydrophilic polymer directly on the polymer membrane pore surface. After that the membrane is washed with water and dried at the temperature of not less than 20°C and not more than 50°C. The hydrophilic polymer solution used depending on the method of production is an aqueous solution or an aqua-alcoholic solution of a hydrophilic polymer based on monobasic or dibasic alcohols, preferably on ethanol or isopropanol. When an aqueous solution of a hydrophilic polymer is used, the hydrophobic membrane should first be wetted out by treating it with an alcohol-glycerol mixture to provide a better contact between the porous matrix surface and the freshly prepared sol. The aqueous solution of a salt of an alkaline metal alkalized by its hydroxide may be e.g. a solution of sodium chloride, carbonate, oxalate, or potassium chloride, iodate, citrate. For alkalization, an alkaline agent is used, such as an aqueous solution of an alkaline metal hydroxide, for instance potassium or sodium hydroxide. Silver, gold or copper ions are used as the metal ions.

To increase the permeability of polymer membranes, for instance of polyolefin membranes, they may normally be subject to thermal stabilization. Thermal stabilization of the polymer membrane of the claimed composite material may be carried out either before the treatment of the membrane with a freshly prepared sol or after the treatment, or partially before the treatment and partially after the same.

Examples of production of the claimed composite material are provided below.

### Example 1

30 ml of water-ethanol mixture (ethanol-water 1:1 by volume) are added to 60 ml of 2% polyvinyl alcohol solution, then 30 ml of AgNO₃ solution (2 g/l Ag, acidated with nitric acid), then 30 ml of alcohol are added while stirring. 7.5 ml of aqueous sodium hydroxide solution (4N) are added to the resulting clear solution while stirring. Upon addition of the alkali the solution becomes brown. Freshly prepared slowly coagulating sol is used for treating a polyethylene-based hollow-fiber membrane subjected to prior thermal stabilization, immediately (within 1 minute), as in this particular period of time active metallic silver particles are formed, which subsequently form clusters of silver that are capable of chemically binding with the matrix pore surface ("rivet mechanism"). Formation of nuclei takes place via the formation of AgOH and its further degradation. In the meantime, molecules of polyvinyl alcohol stabilize the formed active nuclei, and stable active zones are generated, which comprise a combination of polyvinyl alcohol molecules and clusters of silver having sizes distributed in the range of approximately 30 to 70 nm, wherein the amount of silver clusters is 0,5 mg per 1 m² of outer surface of the membrane, and the amount of hydrophilic polymer is 40 mg per 1 m² of outer surface of the membrane. The growth and structuring of silver clusters in the presence of polyvinyl alcohol molecules takes place in an alkaline environment (pH≥9) and at the temperature of 25°C. The membrane is held in the sol for approximately 1-1,5 hour. The hollow-fiber membrane becomes greenish-brown and the sol becomes dark and opaque (up to dark grey-brown color). When the treatment time expires, the membrane is taken out of the sol, washed with water and dried.

### Example 2

A hollow-fiber polyethylene-based membrane subjected to prior thermal stabilization is treated with an alcohol-glycerol mixture (drying may be omitted) to provide the best contact between the surface of the porous matrix and the freshly prepared sol. The alcohol-glycerol mixture is glycerol dissolved in ethanol (20% wt). 60 ml water are poured to 60 ml of 2% polyvinyl alcohol solution, then 30 ml of AgNO₃ solution (2 g/l Ag, acidated with nitric acid) are added. 7.5 ml of aqueous sodium hydroxide solution (4N) are added to the resulting clear solution while stirring. The solution becomes red-brown. Freshly prepared slowly coagulating sol is used for treating the polyethylene-based hollow-fiber membrane subjected to prior thermal stabilization, immediately (within 1 minute), as in this particular period of time active metallic silver particles are formed, which subsequently form clusters of silver that are capable of chemically binding with the matrix pore surface ("rivet mechanism"). Formation of nuclei takes place via the formation of AgOH and its further degradation. In the meantime, molecules of polyvinyl alcohol stabilize the formed active nuclei, and stable active zones are generated, which comprise a combination of polyvinyl alcohol molecules and clusters of silver having sizes distributed in the range of approximately 20 to 90 nm, wherein the amount of silver clusters is 0,7 mg per 1 m² of outer surface of the membrane, and the amount of hydrophilic polymer is 50 mg per 1 m² of outer surface of the membrane. The growth and structuring of silver clusters in the presence of polyvinyl alcohol molecules takes place in an alkaline environment (pH≥9) and at the temperature of 25°C. The membrane is held in the sol for approximately 1-1,5 hour. The membrane becomes brown and the sol becomes dark and opaque up to dark brown color. When the treatment time expires, the hollow-fiber membrane is taken out of the sol, washed with water and dried.

### Example 3

500 ml of water-isopropyl alcohol mixture (1:1 by volume) are poured in 500 ml of 2% aqueous polyvinyl alcohol solution, then 50 ml of AgNO₃ solution (2 g/l Ag, acidated with nitric acid) are added. The solution is heated up to 50°C. 10 ml of 15% aqueous potassium chloride solution alkalized with potassium hydroxide up to pH=9 are added to the resulting clear solution while actively stirring. When the potassium chloride solution is added, the reactive solution becomes grey-brown. Freshly prepared stable sol is used for treating the polyethylene-based hollow-fiber membrane subjected to prior thermal stabilization within 60 minutes, as in this particular period of time active metallic silver particles are formed, which subsequently form clusters of silver that are capable of chemically binding with the matrix pore surface ("rivet mechanism"). Formation of nuclei takes place both via the formation of AgOH/Ag₂O and via the formation of slightly soluble argentic chloride with their further reduction to metallic silver. In the meantime, molecules of polyvinyl alcohol stabilize the formed active nuclei, and stable active zones are generated, which comprise a combination of polyvinyl alcohol molecules and clusters of silver having sizes distributed in the range of approximately 10 to 80 nm, wherein the amount of silver clusters is 0,9 mg per 1 m² of outer surface of the membrane, and the amount of hydrophilic polymer is 60 mg per 1 m² of outer surface of the membrane. In the process of treatment, especially at a high temperature, the growth and structuring of silver clusters and chemical binding of the clusters with the polymer matrix pore surface takes place. The membrane is held submerged in the treatment solution for 20-30 minutes at the temperature of 45-50°C. The hollow-fiber membrane becomes brown-grey. When the treatment time expires, the membrane is taken out of the sol, washed with water and dried, preferably under the light at 50°C.

### Example 4

500 ml of water-isopropyl alcohol mixture (1:1 by volume) are poured in 500 ml of 2% aqueous polyvinyl alcohol solution. The solution is heated up to 50°C. A polyethylene-based hollow-fiber membrane subjected to prior thermal stabilization is immersed in the solution and soaked for 10 minutes. The membrane is taken out of the treatment solution, rinsed with distilled water and immersed in a 10% aqueous argentic nitrate solution for 10 minutes. As a result of sequential treatment, the membrane pore surface is wetted out, the membrane is soaked with the treatment solution and hydrophilized as its surface holds hydrophilic polymer macromolecule chains, which also comprise silver ions, by means of adhesion forces. Then the membrane is rinsed with water and immersed in a 5% aqueous potassium hydroxide solution for 5 minutes. When reduction of silver ions in an alkaline environment takes place, nuclei of metallic silver clusters are formed. In the meantime, molecules of polyvinyl alcohol stabilize the formed active metallic nuclei, and stable active zones are generated, which comprise a combination of polyvinyl alcohol molecules and clusters of silver having sizes distributed in the range of approximately 10 to 80 nm, wherein the amount of silver clusters is 5 mg per 1 m² of outer surface of the membrane, and the amount of hydrophilic polymer is 50 mg per 1 m² of outer surface of the membrane. In the process of treatment, the growth of silver clusters and chemical binding of the clusters with the polymer matrix pore surface takes place. The hollow-fiber membrane becomes brown-grey. When the treatment time expires, the membrane is taken out of the solution, washed with water and dried under the light at 50°C.

### Example 5

500 ml of water-isopropyl alcohol mixture (1:1 by volume) are poured in 500 ml of 2% aqueous polyvinyl alcohol solution. The solution is heated up to 50°C. A polyethylene-based hollow-fiber membrane subjected to prior thermal stabilization is immersed in the solution and soaked for 10 minutes. The membrane is taken out of the treatment solution, rinsed with distilled water and immersed in a 10% aqueous argentic nitrate solution for 10 minutes. As a result of sequential treatment, the membrane pore surface is wetted out, the membrane is soaked with the treatment solution and hydrophilized as its surface holds hydrophilic polymer macromolecule chains, which also comprise silver ions, by means of adhesion forces. Then the membrane is rinsed with water and immersed in a 10% aqueous potassium chloride solution, alkalized with potassium hydroxide up to pH=9 and heated up to 50°C, for 15 minutes. Here the formation of colloid particles of argentic chloride takes place, which are quickly reduced in an alkaline environment to the metal, and nuclei of metallic silver clusters are formed. In the meantime, molecules of polyvinyl alcohol stabilize the formed active metallic nuclei, and stable active zones are generated, which comprise a combination of polyvinyl alcohol molecules and clusters of silver having sizes distributed in the range of approximately 10 to 80 nm, wherein the amount of silver clusters is 12 mg per 1 m² of outer surface of the membrane, and the amount of hydrophilic polymer is 70 mg per 1 m² of outer surface of the membrane. In the process of treatment, especially at a high temperature, the growth of silver clusters and chemical binding of the clusters with the polymer matrix pore surface takes place. The hollow-fiber membrane becomes brown-grey. When the treatment time expires, the membrane is taken out of the solution, washed with water and dried under the light at 50°C.

The claimed composite material may be used in liquid purifying devices, in particular for purifying drinking water, in the cases where it is necessary to provide for bacteriostasis in the filtering medium and to further provide for bacteriostasis in the juxtamembrane region alongside with a high output. Besides, the composite material may be used for providing hydrophilic and bacteriostatic properties for surfaces of polymer materials.

Although the present invention was described in respect of its embodiment, which is presently deemed most practically advantageous and preferable, it is understood that this invention is not limited by the above embodiment, but, on the contrary, it encompasses different modifications and variations within the scope and spirit of the proposed set of claims.

## Claims

1. A composite material for purification of a liquid by filtration, made of a polymer membrane, which is a fibrillar-porous matrix comprising a hydrophilic polymer and a metallic antibacterial agent, **characterized in that** the fibrillar-porous matrix comprises, at least in a part of its volume, stable active zones consisting of clusters of metallic antibacterial agent in combination with molecules of the hydrophilic polymer, wherein at least some of the clusters of the metallic antibacterial agent are bound to each other and to the matrix pore surface by means of the hydrophilic polymer molecules, wherein at least some of the clusters of the metallic antibacterial agent are additionally chemically bound to the matrix pore surface, wherein the mean distance between the active zones is smaller than at least three times the diameter of the matrix pores.

2. The composite material for purification of a liquid by filtration of claim 1, **characterized in that** the amount of clusters of the metallic antibacterial agent is not more than 50 mg per 1 m² of the outer surface of the polymer membrane.

3. The composite material for purification of a liquid by filtration of claim 1, **characterized in that** the amount of the hydrophilic polymer is not more than 80 mg per 1 m² of the outer surface of the polymer membrane.

4. The composite material for purification of a liquid by filtration of claim 1, **characterized in that** a membrane based on polyolefins, polyacrylates, polyesters, polyamides or polysulphones is used as the polymer membrane.

5. The composite material for purification of a liquid by filtration of claim 4, **characterized in that** a hollow-fiber membrane is preferably used.

6. The composite material for purification of a liquid by filtration of claim 4, **characterized in that** a membrane based on polyolefins is preferably used.

7. The composite material for purification of a liquid by filtration of claim 6, **characterized in that** a polyethylene-based membrane is preferably used.

8. The composite material for purification of a liquid by filtration of claim 1, **characterized in that** e.g. polyvinyl alcohol, polyvinylpyrrolidon, polyamines or any combination thereof are used as the hydrophilic polymer.

9. The composite material for purification of a liquid by filtration of claim 1, **characterized in that** polyvinyl alcohol is preferably used.

10. The composite material for purification of a liquid by filtration of claim 1, **characterized in that** the clusters of metallic antibacterial agent are e.g. clusters of silver, copper or gold.
